# EUROPEAN PATENT APPLICATION

(11) **EP 2 853 833 A1**
(43) Date of publication of application: **01.04.2015**
(21) Application number: 12876946.0
(22) Date of filing: 17.05.2012
(51) Int. Cl.: F24F 11/02

(54) **MANAGEMENT SYSTEM, DISPLAY METHOD, AND PROGRAM**

(71) Applicant: Mitsubishi Electric Corporation, Tokyo 100-8310 (JP)
(72) Inventor: KUROIWA, Takeru, Tokyo 100-8310 (JP); ISHIZAKA, Taichi, Tokyo 100-8310 (JP); SUZUKI, Shigeki, Tokyo 100-8310 (JP); ITO, Takahiro, Tokyo 100-8310 (JP); KOMIYA, Noriyuki, Tokyo 100-8310 (JP)
(74) Representative: Pfenning, Meinig & Partner GbR
(86) International application number: PCT/JP2012/062717
(87) International publication number: WO 2013/171889

(57) **Abstract**

A planar diagram (MP1) of a floor of a facility in which equipment are installed, and the units laid out on the floor, such as indoor units (21-25), are simultaneously displayed on a display apparatus. By operating a timeline (TL) displayed on the display apparatus, a user can confirm the transition of operation statuses of the indoor units (21-25) installed on the floor, together with the layout of the indoor units (21-25). Thus, the user can compare and confirm the operation status of each unit without performing a troublesome operation in the event of abnormality in the units constituting an equipment system, thereby quickly identifying the cause of abnormality.

## Description

### Technical Field

The present disclosure relates to a management system, and a display method and program, and more particularly, to a management system for managing equipment installed in a facility, and a display method and program for displaying the operation status of the equipment installed in the facility.

### Background Art

Equipment installed in large-scale facilities such as office buildings and stores are mutually connected via a network and centrally managed through a remote control, control equipment and/or the like. The central management of dispersed equipment allows the various pieces of equipment to be efficiently operated in accordance with the usage status of the facility.

With this type of system, the status of the system is constantly monitored, and the operation status and operation history of the system can be confirmed using a monitor of the control equipment. For example, in the management apparatus disclosed in Patent Literature 1, equipment installed in a building is constantly monitored. Furthermore, when an abnormality of the equipment is detected, contents of the abnormality are displayed on a display apparatus. Through this, a user of the equipment can easily specify the occurrence of abnormalities and the contents thereof.

### Citation List

### Patent Literature

Patent Literature 1: Unexamined Japanese Patent Application Kokai Publication No. 2003-099882.

### Summary of Invention

### Technical Problem

In recent years, initiatives aimed at reducing CO₂ emissions or reducing energy consumption have become highly regarded accompanying global warming and economical and industrial development expanding on a global scale. As a result, equipment is becoming increasingly multifunctional and along with this the number of equipment and the volume of information managed by a single piece of control equipment increase every year.

Accordingly, in the event that an abnormality occurs in the equipment, the user is required to analyze an enormous volume of history to specify the breakdown location and breakdown cause.

In consideration of the foregoing, it is an objective of the present disclosure to simplify the work of specifying the cause of system abnormalities and reduce the work burden on a user managing equipment by displaying a layout of the equipment and an operation history of the equipment, linked together.

### Solution to Problem

To achieve the above objective, a management system according to the present disclosure comprises storage means for storing an operation history of equipment used in a facility, and display means for displaying the operation history stored in the storage means along with a layout of the equipment in the facility.

### Advantageous Effects of Invention

According to the present disclosure, an operation history of the equipment is displayed along with a layout of the equipment. Through this, a user of the equipment can simultaneously confirm the operation history of the equipment and the layout of the equipment, making it possible to easily specify the cause of the system abnormality and to understand the operation status.

### Brief Description of Drawings

FIG. 1 is a block diagram of a management system according to present embodiment;
FIG. 2 is a layout diagram of various equipment constituting an equipment system;
FIG. 3 is a block diagram of an equipment management apparatus;
FIG. 4 is a drawing showing information stored in an auxiliary storage;
FIG. 5 is a planar diagram of a floor;
FIG. 6 is a drawing schematically showing information indicating operation status;
FIG. 7 is a drawing showing a table indicating one example of restriction rules for access rights;
FIG. 8 is a drawing showing an image displayed on a display device;
FIG. 9 is a drawing for explaining the display format of the equipment information; and
FIG. 10 is a drawing showing an information browsing window.

### Description of Embodiments

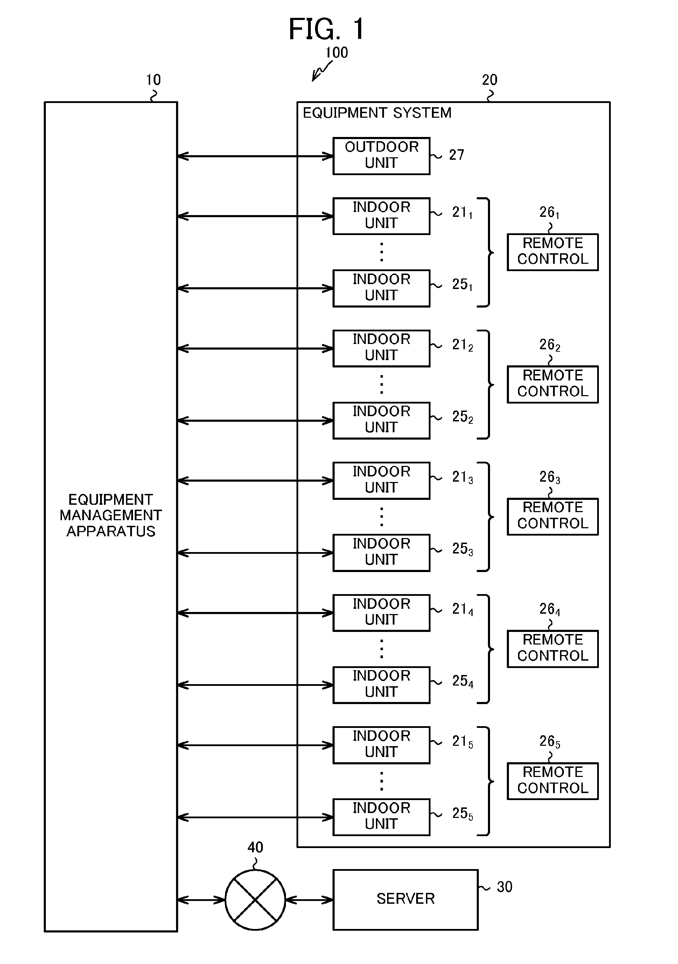

An embodiment of the present disclosure is described below with reference to the drawings. FIG. 1 is a block diagram of a management system 100 according to the embodiment. The management system 100 is a system for managing equipment installed in a commercial facility such as an office building and/or the like. As shown in FIG. 1, the management system 100 comprises an equipment management apparatus 10, an equipment system 20, and a server 30 connected to the equipment management apparatus 10 via the Internet 40.

The equipment system 20 comprises indoor units 21-25, remote controls 26 for operating the indoor units 21-25, and an outdoor unit 27.

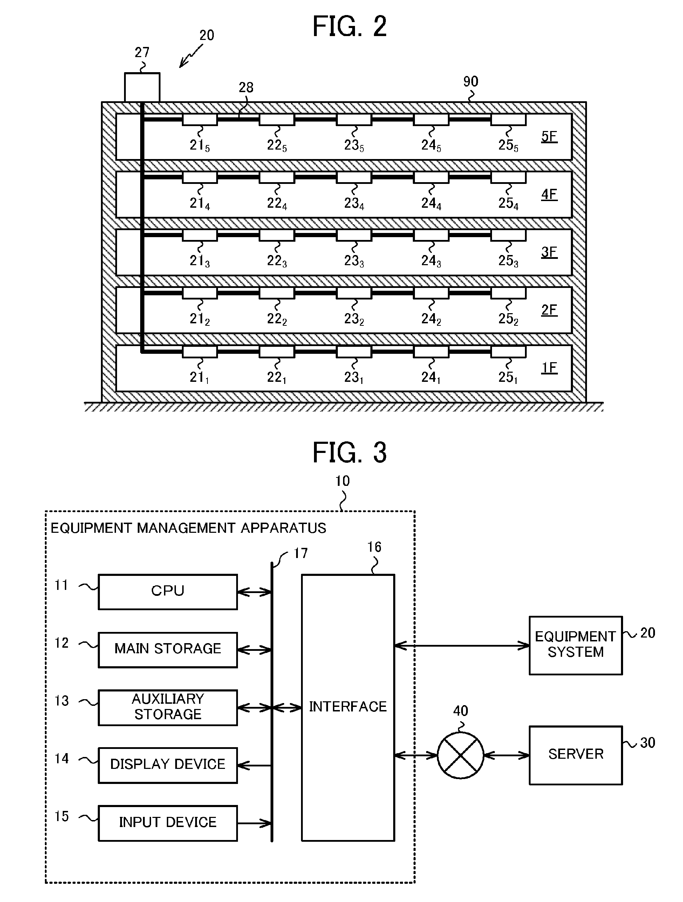

FIG. 2 is a layout diagram of various equipment constituting the equipment system 20. As shown in FIG. 2, the equipment system 20 is installed in a five-story office building 90 having five floors 1F-5F. In this embodiment, the indoor units 21₁-25₁ are installed on the ceiling of the floor 1F. The indoor units 21₂-25₂ are installed on the ceiling of the floor 2F. The indoor units 21₃-25₃ are installed on the ceiling of the floor 3F. The indoor units 21₄-25₄ are installed on the ceiling of the floor 4F. The indoor units 21₅-25₅ are installed on the ceiling of the floor 5F. In addition, the outdoor unit 27 is installed on the roof of the office building 90.

As can be seen by referring to FIG. 1, the indoor units 21-25 installed on each floor can be operated by the remote control 26 corresponding to each. The user using each floor can accomplish operation, stopping, temperature settings, output settings and/or the like for each of the indoor units 21-25 via the remote control 26.

The respective indoor units 21-25 and the outdoor unit 27 are mutually connected by piping 28 in which coolant circulates. Furthermore, heat exchange between the coolant circulating in the piping 28 and the air inside the room is accomplished by the indoor units 21-25, and heat exchange between the coolant circulating in the piping 28 and the outside air is accomplished by the outdoor unit 27. Through this, heat exchange between the air on each of the floors 1F-5F and the outside air is accomplished, so air conditioning of each of the floors 1F-5F of the office building 90 is realized.

FIG. 3 is a block diagram of the equipment management apparatus 10. As shown in FIG. 3, the equipment management apparatus 10 is a computer comprising a CPU (Central Processing Unit) 11, a main storage 12, an auxiliary storage 13, a display device 14, input device 15, an interface 16 and a system bus 17 that connects the above-described components to each other.

The main storage 12 includes RAM (Random Access Memory) and/or the like, and is used as a work area for the CPU 11.

The auxiliary storage 13 includes non-volatile memory such as ROM (Read Only Memory), a magneto-optical disc, semiconductor memory and/or the like. The auxiliary storage 13 stores programs executed by the CPU 11, various kinds of parameters and/or the like, and also stores equipment information and/or the like for the various equipment constituting the equipment system.

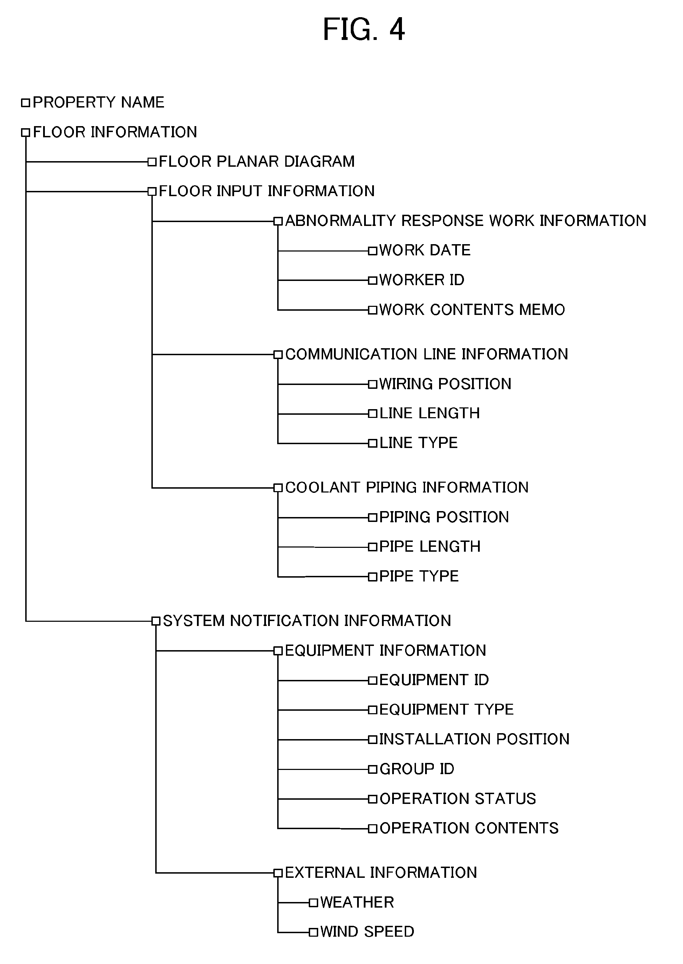

FIG. 4 is a drawing schematically showing information stored in the auxiliary storage 13. As shown in FIG. 4, property names and floor information are stored in the auxiliary storage 13.

The property names are names of office buildings and commercial facilities in which the equipment system 20 is installed.

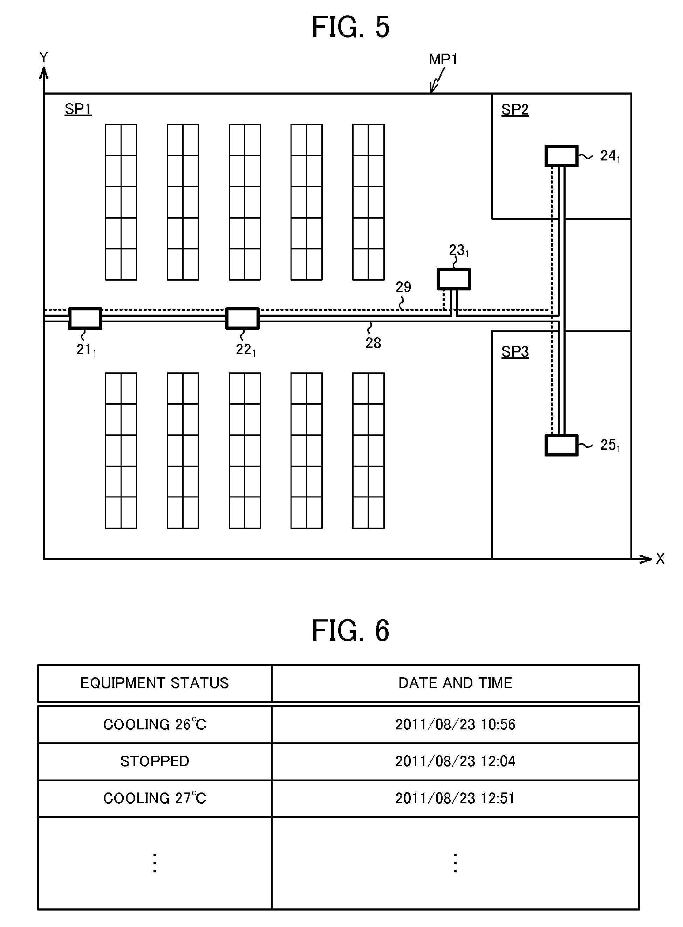

The floor information comprises floor planar diagrams, floor input information and system notification information. Furthermore, the floor planar diagrams comprising the floor information are image information defining planar diagrams of each floor of the office building 90. FIG. 5 is a planar diagram MP1 of the floor 1F. As can be seen by referring to FIG 5, the planar diagram MP1 displays outer walls and inner walls defining three spaces SP1, SP2, and SP3 dividing the floor 1F, and furniture such as desks and cabinets arranged on the floor 1F. In addition, in the planar diagram MP1, an XY coordinate system with the origin in the lower left corner is defined, as shown in FIG. 5. Accordingly, positions on the planar diagram MP1 can be specified by coordinates (x,y).

In this embodiment, image information regarding planar diagrams of each of the floors 1F-5F of the office building 90 and the roof planar diagram are stored in advance in the auxiliary storage 13.

The floor input information comprises abnormality response work information, communication line information and coolant piping information. Furthermore, the abnormality response work information comprises a work day, worker ID and work contents memos. This abnormality response work information is input by the user of the equipment system 20.

The work day is information for specifying the day and period when the above-described fixing work was accomplished, and is information sufficient for specifying the work day or work period, for example such as "XX Month XX Day, 2010" or "XX Month XX Day to YY Month YY Day, 2010".

The worker ID is identifying information individually assigned to workers maintaining and managing the equipment system 20. The name, affiliation and/or the like of the worker who accomplished the fixing work can be specified based on this identifying information.

The work contents memos are contents of work necessary when fixing equipment that has broken down, for example when the indoor units 21-25 or the outdoor unit 27 break down. Specifically, the memos are information for specifying the contents of the fixing work, such as "exchanged cooling fan" or "exchanged broken coolant piping."

The communication line information comprises information indicating wiring position, line length and line type, and this information is input by a maintenance manager or the supplier of the equipment system 20 at the time of completion of installation work on the equipment system 20.

The indoor units 21-25, the outdoor unit 27, and the equipment management apparatus 10 are connected to each other by the communication lines, as shown in FIG. 1. The above-described wiring position is information for specifying installation routes for communication lines connecting the equipment to each other. The wiring position is information specifying a position on the floor planar diagram, and is coordinates (x1, y1) of the starting point of the communication line and coordinates (x2, y2) of the ending point. For example, as shown in FIG. 5, for the communication line 29 laid between the indoor unit 21₁ and the indoor unit 22₁, the coordinates (x₂₁, y₂₁) of the indoor unit 21₁ and the coordinates (x₂₂, y₂₂) of the indoor unit 22₁ are stored as information indicating the wiring position.

The line length is information indicating the length of the communication line itself. Specifically, as shown in FIG. 5, this is information indicating the length of the communication line 29 running from the indoor unit 21₁ to the indoor unit 22₁. In addition, the line type is information such as the use application, outer diameter, and/or the like of the communication lines.

Returning to FIG. 4, the coolant piping information comprises information indicating the piping position, pipe length and pipe type, and this information is input by the supplier of the equipment system 20 or a maintenance manager at the time of completion of installation work on the equipment system 20.

The indoor units 21-25 and the outdoor unit 27 are connected to each other by the piping 28, as shown in FIG. 2. The above-described piping position is information for specifying the installation route of the piping 28 connecting the equipment to each other. This piping position is information for specifying a position on the floor planar diagram, and is the coordinates (x3, y3) of the starting point and the coordinates (x4, y4) of the ending point of the piping 28. For example, as shown in FIG. 5, for the piping 28 laid between the indoor unit 21₁ and the indoor unit 22₁, the coordinates (x₂₁, y₂₁) of the indoor unit 21₁ and the coordinate (x₂₂, y₂₂) of the indoor unit 22₁ are stored as information indicating the wiring position.

The pipe length is information indicating the length of the piping 28 itself. Specifically, as shown in FIG. 5, this is information indicating the length of the piping 28 running from the indoor unit 21₁ to the indoor unit 22₁. In addition, the pipe type is information such as the orientation of coolant flowing through the piping, the outer diameter, and/or the like.

Returning to FIG. 4, the system notification information comprises equipment information and external information. The equipment information is information about each unit constituting the equipment system 20, and comprises information indicating equipment ID, equipment type, installation position, group ID, operation status and operation contents.

The equipment ID is a code comprising an alphabet or a number and is assigned to each unit. The equipment management apparatus 10, when establishing communication with the equipment system 20, recognizes each of the indoor units 21-25 and the outdoor unit based on this identification code.

The equipment type is information indicating whether the unit is an indoor unit or an outdoor unit, and information for specifying the manufacturer of the unit, unit specs, and/or the like. The equipment type information is assigned to each unit.

The installation position is information for specifying the floor on which the unit is installed, and information for specifying the position of the unit on the floor. As shown in FIG. 5, for the unit, there are coordinates (x,y) based on an XY coordinate system whose origin is in one corner of the floor. By using information indicating this installation position, it is possible to display the indoor units 21₁-25₁ laid out on the floor 1F overlaying the planar diagram MP1 of the floor 1F, as shown in FIG. 5.

The group ID is information for specifying groups comprising the indoor units 21-25. The group ID is assigned to each of the indoor units 21-25.

As can be seen by referring to FIG. 5, in this embodiment, the indoor units 21₁-23₁ installed in the space SP1 of the floor 1F constitute one group, and the indoor units 24₁ and 25₁ installed respectively in the spaces SP2 and SP3 do not constitute a group. When the above-described group is called the first group, a group ID indicating that the indoor units 21₁-23₁ belong to the first group is assigned to the indoor units 21₁-23₁. In addition, a group ID indicating that the indoor units 24₁ and 25₁ do not belong to the first group is assigned to the indoor units 24₁ and 25₁.

From the group ID obtained through communication with the indoor units 21₁-25₁, the equipment management apparatus 10 can recognize that each of the indoor units 21₁-23₁ belong to a common group.

In addition, through operation by the remote control 26₁, the indoor units 21₁-23₁ belonging to the common group are operated together. Specifically, when setting of the temperature and setting of output by the remote control 26₁ are accomplished for any of the indoor units 21₁-23₁, the indoor units 21₁-23₁ each operate with a common set temperature and output.

A group ID is similarly defined for the indoor units installed on the other floors 2F-5F.

As explained above, information about the equipment type, installation position and group ID is input by the supplier or maintenance manager of the equipment system 20 at the time installation of the equipment system 20 is completed.

The operation status is information indicating the operation status of the equipment. FIG. 6 is a drawing schematically showing information indicating operation status. As shown in FIG. 6, the operation status comprises information indicating equipment status and date and time. The information indicating the equipment status is information for specifying the set temperature of the indoor units 21-25, and whether the units are currently in cooling operation or are currently in heating operation, information for specifying whether the units are operating or are halted, and/or the like. As can be seen by referring to FIG. 6, this information is stored chronologically. Information indicating equipment status stored chronologically and information indicating date and time become information indicating the operation history of the indoor units 21-25.

Returning to FIG. 4, the operation contents are information indicating commands from the user input via the remote control 26. This information is information for specifying the temperature set by the user, and the selected operation mode.

As explained above, the operation status and operation contents are information output from the indoor units 21-25 and successively accumulated in the auxiliary storage 13.

The external information comprises information indicating weather and wind speed. The weather is information indicating the weather at the location of the office building 90 in which the equipment system 20 is installed. In addition, the wind speed is information indicating the wind speed at the location of the office building 90 in which the equipment system 20 is installed. This information is obtained from outside via the Internet 40, and is stored chronologically in the auxiliary storage 13.

Returning to FIG. 3, the display device 14 has an LCD (Liquid Crystal Display) and displays processing results of the CPU 11, and/or the like.

The input device 15 has a user interface comprising a keyboard and a pointing device such as a mouse and/or the like. Instructions from the user or the like are input via the input device 15 and conveyed to the CPU 11 via the system bus 17.

The interface 16 comprises a communication interface with the equipment system 20 and the Internet 40. The indoor units 21-25 and the outdoor unit 27 constituting the equipment system 20 are connected to the system bus 17 via the interface 16.

The server 30 is a computer comprising a CPU, main storage, auxiliary storage, display device, input device, and interface, similar to the equipment management apparatus 10. The server 30 acquires the information shown in FIG. 4 through communication with the equipment management apparatus 10, and furthermore, accumulates the acquired information chronologically. This enables monitoring or maintenance and management of the equipment system 20 installed in the office building 90 and other facilities in a centralized manner.

In addition, both the server 30 and the equipment management apparatus 10 are connected to the Internet 40. This enables remote monitoring and maintenance inspections on the operation status and operation history of the equipment system 20 installed in the office building 90. However, from the perspective of security of the management system 100, certain restrictions are imposed on access rights to the equipment management apparatus 10 and the server 30.

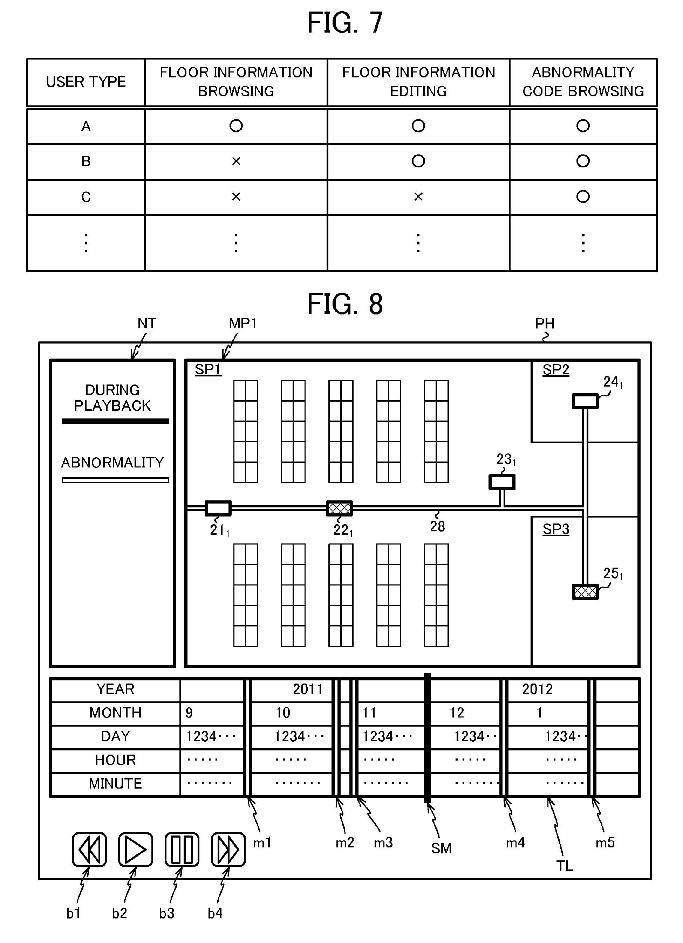

FIG. 7 shows a table indicating one example of restriction rules for access rights. As shown in FIG. 7, in this embodiment, browsing of the floor information, editing of floor information and browsing of the abnormality codes are restricted by user. For example, browsing of abnormality codes for specifying equipment in which an abnormality such as a breakdown had occurred is permitted for all users. On the other hand, rights to browse floor information necessary for monitoring equipment installed on the floor, and editing rights to floor information for editing or deleting the operation history of the equipment are permitted only for specific individuals, such as the manager of the equipment, the supplier, and/or the like.

Next, a method of using the management system 100 constructed as described above is explained. The user of the management system 100, for example, gives a command via the input device 15 of the equipment management apparatus 10 to the CPU 11 to display history information for the equipment installed on the floor 1F. Through this, an image PH shown in FIG. 8 is displayed on the display device 18.

FIG. 8 is composed of a planar diagram MP1 in which the indoor units 21₁-25₁ installed on the floor 1F are laid out, a timeline TL and a supplementary item NT regarding the image PH.

The planar diagram MP1 in which the indoor units are laid out is generated from image information stored in the auxiliary storage 13, and the coordinates (x,y) of the indoor units 21₁-25₁ in the planar diagram MP1. In the planar diagram MP1 the laid out state of the piping 28 and the communication lines 29 can be displayed as necessary, for example as shown in FIG. 5.

The timeline TL is for chronologically displaying the operation history of the indoor units 21₁-25₁. The timeline TL comprises five lines showing the year, month, day, hour, and minute. When a button b2 is pressed, the five lines of the timeline TL are moved relatively to a reference mark SM displayed superimposed on the timeline TL. Furthermore, when buttons b1 and b4 are pressed, the lines are relatively fast-rewound or fast-forwarded with respect to the reference mark SM. In addition, the lines halt when a button b3 is pressed.

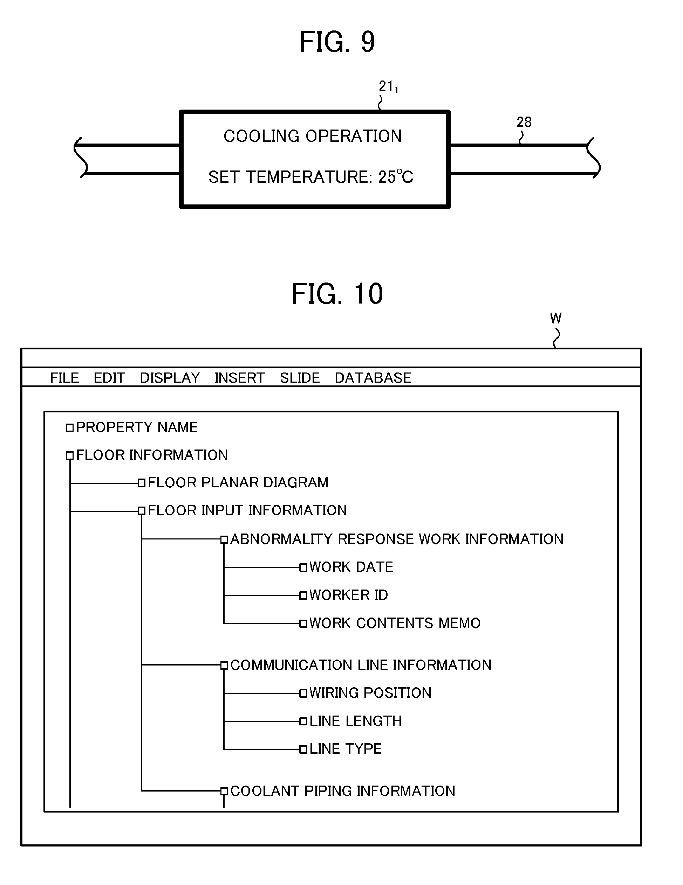

The user moves the timeline TL by operating the buttons b1 to b4 using a pointing device such as a mouse and/or the like and causes the desired time to match with the standard mark SM, thereby allowing the operation status of the indoor units 21₁-25₁ at that time to be displayed on the display device 14. The display of the operation status of the indoor units 21₁-25₁ is, for example, overlaid on the indoor units 21₁-25₁ laid out in the planar diagram MP1, and as shown in FIG. 9, is accomplished by displaying the operation mode, set temperature, and/or the like.

In addition, as shown in FIG. 8, when an abnormality occurs in the indoor units 21₁-25₁, the color or fill pattern of the icons showing the indoor units 21₁-25₁ laid out on the planar diagram MP1 is altered. Marks m1 to m5 shown on the timeline TL are marks that move along with the lines comprising the timeline TL. The marks m1 to m5 show that an abnormality has occurred at any of the indoor units 21₁-25₁ at the time lined up with the marks m1 to m5.

The user moves the timeline TL by operating the buttons b1 to b4 and causes the marks m1 to m5 to match the standard mark SM, thereby allowing the indoor units 21₁-25₁ where an abnormality occurred at that time to be displayed. For example, when the marks m1 to m5 are caused to match the standard mark SM, and, as shown in FIG. 8, the fill pattern of the indoor units 22₁ and 25₁ has changed, the user can confirm that an abnormality occurred at the indoor units 22₁ and 25₁ at the time indicated by the standard mark SM.

In addition, for example by clicking the icon showing the indoor units 21₁-25₁ displayed on the screen, the icon showing the piping 28, or the icon showing the communication lines 29, the user can cause information about the equipment such as the corresponding indoor units 21₁-25₁ and/or the like to be displayed. Specifically, when the desired icon shown on the display device 14 is clicked, an information browsing window W shown in FIG. 10 pops up, making it possible to browse information about the corresponding equipment. The information displayed in the information browsing window W is information at the time defined by the timeline TL, and the contents thereof are equivalent to the contents of the information shown in FIG. 4.

In addition, the user can cause a screen similar to the screen shown in FIG. 8 to be displayed on the display device 14 for each of the floors 2F-5F. Furthermore, a history of the equipment arranged on each of the floors 2F-5F can be similarly displayed on the display device 14.

As explained above, with this embodiment, the planar diagram MP1 for a floor of the office building 90 and equipment laid out on that floor are displayed simultaneously on the display device 14, as shown in FIG. 5. Furthermore, by manipulating the timeline TL, the user can confirm changes in the operation status of multiple equipment installed on the floor, along with the layout of the equipment.

Accordingly, when an abnormality occurs in the indoor units or outdoor unit constituting the equipment system 20, the user can compare and confirm the operation status of various units without the troublesome operation, such as, of examining the operation history for each equipment individually and comparing equipment to each other. As a result, the user of the management system 100 can easily specify the causes of abnormalities.

In this embodiment, when an icon in the image PH is clicked, the information browsing window W displaying information for equipment corresponding to the icon pops up. This enables information for the desired equipment to be easily confirmed. Accordingly, it is possible to increase the efficiency of work for specifying causes of abnormalities, while also reducing the work burden on the user.

With this embodiment, it is possible to confirm not just the equipment but also the installation status, the line length or pipe length, and the line type or pipe type of the piping 28 and the communication lines 29 connected to the equipment as well as the layout of the equipment. This facilitates the estimation of the causes of breakdowns even when the cause of the abnormality is other than the indoor units or outdoor unit.

In addition, confirmation of the installation status, the line length or pipe length, and the line type or pipe type of the piping 28 and the communication lines 29 connected to the equipment facilitate swift and easy preparation of work for fixing abnormalities.

With this embodiment, information about each equipment constituting the equipment system 20 is sent to the server 30 connected to the Internet 40 and is accumulated on the server 30. This enables remote monitoring or maintenance inspections of the operation status and operation history of the equipment system 20 installed in the office building 90 in a centralized manner. In addition, sharing knowhow for dealing with abnormalities also becomes easy. With the management system 100, access rights to the server 30 are set, so that no security problems occur.

With this embodiment, the worker ID for specifying the worker is displayed along with the planar diagram MP1. This facilitates specifying workers who accomplished the work of fixing past abnormalities. Accordingly, hearings about abnormalities and feedback about the causes become easy.

The embodiment of the present disclosure has been explained above, but the present disclosure is not limited by the above-described embodiment. For example, in the above-described embodiment, the operation mode and set temperature are displayed along with the indoor units 21-25 laid out on the planar diagram MP1, for example, as shown in FIG. 9. However, the information displayed here is arbitrary, and other information, such as the temperature in the room, the outside air temperature, and/or the like can be selectively displayed.

With the above-described embodiment, the planar diagram MP1 of one floor and equipment laid out on that floor are displayed on the display device 14, as shown in FIG. 8. However, this is not limited thereto, but multiple arrangement diagrams can be displayed on the display device 14.

With the above-described embodiment, the equipment system 20 has been described as being installed in an office building 90. However, this is not limited thereto, but the equipment system 20 can be installed in another commercial facility. In addition, the present disclosure is not limited by the number of floors of the facility, the number of indoor units, or the number of outdoor units.

With the above-described embodiment, the equipment system 20 has been described an air conditioning apparatus comprising indoor units and an outdoor unit. The equipment system 20 may be provided with apparatuses other than indoor units and outdoor units. In addition, the equipment system 20 can have equipment, such as a lighting system, dispersed in the office building, and/or the like.

The equipment management apparatus 10 according to the above-described embodiment can be realized through specialized hardware or through a normal computer system.

With the above-described embodiment, a program is stored in the auxiliary storage 13 of the equipment management apparatus 10, but the program can be stored on a computer-readable non-transitory recording medium such as a flexible disk, a CD-ROM (Compact Disk Read-Only Memory), a DVD (Digital Versatile Disk), an MO (Magneto-Optical disk), and/or the like, and the program can be then distributed, thereby allowing the equipment management apparatus 10 to execute the above-described processes by the program being installed on a computer.

Modifications and variations can be made without departing from broader spirit and scope of the present disclosure. It should be noted that the above embodiments are meant only to be illustrative of those embodiments and are not intended to be limiting the scope of the present disclosure. Accordingly, the scope of the present disclosure should not be determined by the embodiments illustrated, but by the appended claims. It is therefore the intention that the present disclosure be interpreted to include various modifications that are made within the scope of the claims and their equivalents.

### Industrial Applicability

The management system of the present disclosure is suitable for management of equipment. The display method and program of the present disclosure are suitable for displaying the operation status of equipment.

### Reference Signs List

- 10: Equipment management apparatus
- 11: CPU
- 12: Main storage
- 13: Auxiliary storage
- 14: Display device
- 15: Input device
- 16: Interface
- 17: System bus
- 18: Display device
- 20: Equipment system
- 21-25: Indoor units
- 26: Remote controls
- 27: Outdoor unit
- 28: Piping
- 29: Communication line
- 30: Server
- 40: Internet
- 90: Office building
- 100: Management system
- 1F-5F: Floors
- MP: Planar diagram
- NT: Supplementary item
- PH: Image
- SM: Reference mark
- SP1-SP3: Spaces
- Tl: Timeline
- W: Information browsing window
- b1-b4: Buttons
- m1-m5: Marks

## Claims

1. A management system comprising:
storage means that stores an operation history of equipment used in a facility; and
display means that displays the operation history stored in the storage means, along with a layout of the equipment in the facility.

2. The management system according to Claim 1, wherein the operation history includes a history of the set temperature, output, and operation status of the equipment.

3. The management system according to Claim 1 or 2, wherein the display means displays information related to the equipment, along with the layout.

4. The management system according to Claim 3, wherein the information related to the equipment includes identifying information, installation position, equipment type, and properties of the equipment.

5. The management system according to Claim 3 or 4, wherein the information related to the equipment includes the type and installation distance of piping connected to the equipment.

6. The management system according to any one of Claims 3 to 5, wherein the information related to the equipment includes the type and installation distance of communication lines connected to the equipment.

7. The management system according to any one of Claims 1 to 6, wherein the display means displays the operation history chronologically.

8. The management system according to any one of Claims 1 to 7, wherein the display means displays a planar diagram of a floor of the facility and the operation history of the equipment included in the planar diagram.

9. A display method for displaying status of equipment, the method comprising:
a step of storing an operation history of equipment used in a facility; and
a step of displaying the stored operation history chronologically along with a layout of the equipment in the facility.

10. A program for causing a computer to execute:
a procedure for storing an operation history of equipment used in a facility; and
a procedure for displaying the stored operation history chronologically along with a layout of the equipment in the facility.
